# EUROPEAN PATENT SPECIFICATION

(11) **EP 1 707 344 B1**
(45) Date of publication and mention of the grant of the patent: **29.12.2010**
(21) Application number: 05381016.4
(22) Date of filing: 30.03.2005
(51) Int. Cl.: B29C 44/00

(54) **PROCESS FOR MANUFACTURING A MONOLITHIC FAN COWL**
Verfahren zur Herstellung einer monolithischen Lüfterhaube
Procédé de fabrication d'un capot de ventilateur monolithique

(43) Date of publication of application: 04.10.2006
(73) Proprietor: EADS Construcciones Aeronauticas, S.A., 28022 Madrid (ES)
(72) Inventor: GALLEGO PLEITE, Joaquin, 28901, Madrid (ES); FAUSTE DUQUE, José Luis, 28035, Madrid (ES); RUBIO GARCIA, Luis, 11100, Cadiz (ES)
(74) Representative: Elzaburu Marquez, Alberto

(56) References cited:
- EP-A- 1 134 070
- EP-A- 1 149 687
- EP-A- 1 231 046
- US-A- 5 242 523
- US-A- 5 484 277

## Description

### FIELD OF THE INVENTION

The invention relates to the manufacture of a monolithic fan cowl of composite material for aircraft engines using high temperature consolidation processes.

### BACKGROUND

Known fan cowls for aircraft engines are made of the following materials: metallic structures, composite sandwich structures and composite or hybrid monolithic structure.

Classical processes for manufacturing fan cowls use uncured composite materials, which makes these processes complex and with high tolerances in final surfaces.

On the other hand, composite sandwich structures have the problem of water entries that degrade the adhesive.

One example of a monolithic structure is disclosed in WO 99/26841 (Aerospatiale Société Nationale Industrielle). The fan cowl is a panel having a network of axial and circumferential beams, which is manufactured draping composite material on a mold having the shape of the panel to be obtained and baking to polymerize.

US 5,242,523 discloses a method for forming and curing an intricate structure of criss-crossing composite stringers and frames that are bonded to a skin panel. The frames have openings at the locations where they intersect with the stringers which enables the frames to come into direct contact with the skin along most of their length.

EP 1 134 070 disclosed a process for manufacturing pre-cured parts of composite material with green-applied stiffeners in which the assembly of both parts is cured using an autoclave in combination with a vacuum bag.

This invention is intended to provide an improved method of manufacturing a monolithic fan cowl of composite materials.

### SUMMARY OF THE INVENTION

To accomplish this objective, the present invention provides a process for manufacturing a monolithic fan cowl according to claim 1.

In a preferred embodiment the longitudinal hat frames have an omega cross-section and the autoclave curing cycle includes, in addition to the vacuum bag covering the assembly, a tubular vacuum bag inserted into each longitudinal hat frame.

This process allows the manufacture of a fan cowl as an integral element in a shorter time than in the known art.

### BRIEF DESCRIPTION OF DRAWINGS

The features, objects and advantages of the invention will become apparent by reading this description in conjunction with the accompanying drawings, in which:
Figure 1 is a schematic view of the manufacturing process of a fan cowl for aircraft engines according to this invention.

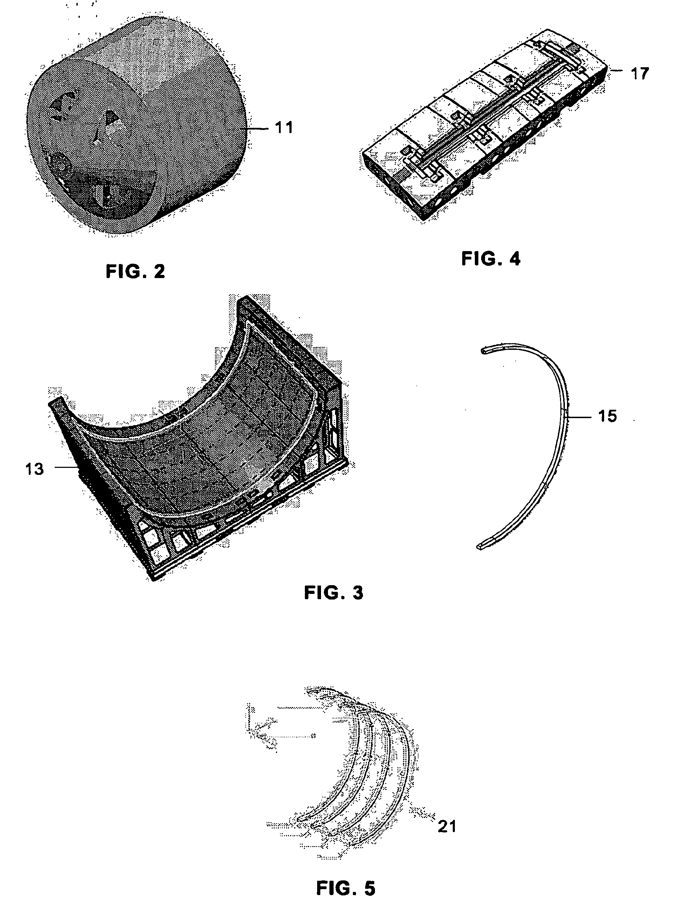

Figure 2 is a perspective view of the tooling used for the manufacture of the fan cowl skin.
Figure 3 is a perspective view of the tooling used for curing the skin and the fan-cowl assembly.
Figure 4 is a perspective view of the tooling used for the manufacture of the fan cowl transversal hat frames.
Figure 5 is a perspective view of the tooling used for the transportation of the longitudinal fresh hat frames.
Figure 6 is a perspective view of the tooling used for the lay-up of the fan cowl longitudinal hat frames.
Figure 7 is a schematic cross-section view of the assembly of the fan-cowl components before the curing step.

### DETAILED DESCRIPTION OF PREFERRED EMBODIMENTS

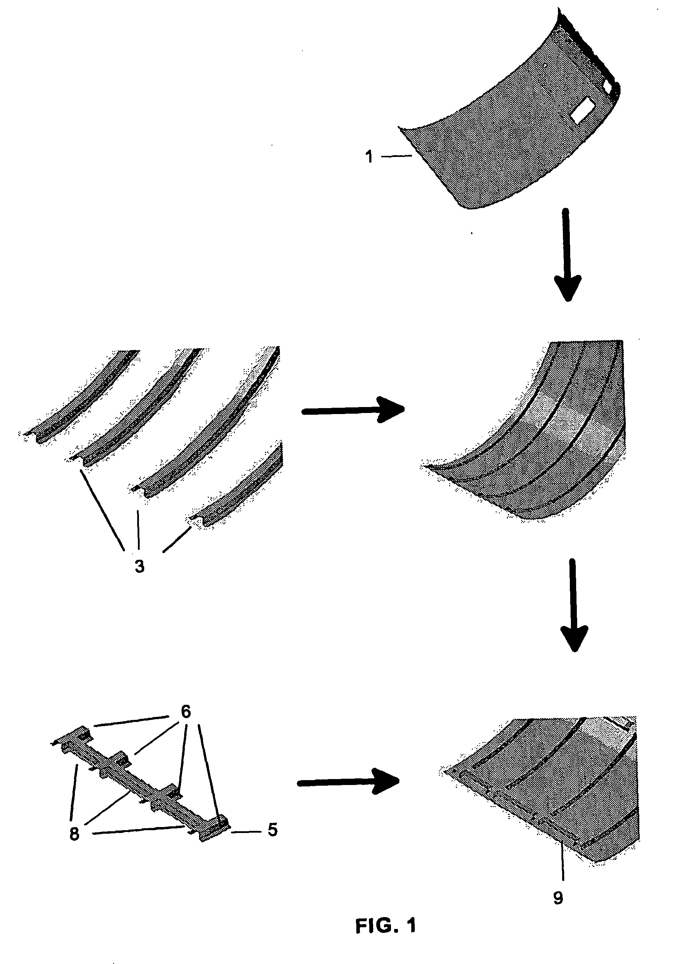

As schematically illustrated in Figure 1 the process for manufacturing a monolithic fan cowl 9 of curvilinear shape for aircraft engines consists of assembling longitudinal hat frames 3 and transversal hat frames 5 over the skin 1.

The skin 1 and the transversal hat frames 5 are cured subcomponents while the longitudinal frames are uncured subcomponents. The whole assembly is then cured.

The manufacturing process of the skin 1 comprises the following steps:
- Automate fiber-placement of carbon fiber prepreg on to a male tool or mandrel 11. Left and right fan-cowl skins 1 for one engine are made at the same time.
- Hand lay-up on mandrel 11 of metallic mesh (for lightening protection).
- Cutting (left and right fan-cowls skins 1) and unloading parts from mandrel 11.
- Locating each part (left and right fan-cowls skins 1) on curing tool 13.
- Peel-ply hand lay-up on inner face of fan-cowls skins 1.
- Vacuum bagging.
- Autoclave curing (6 bar, 180°C).
- Deburring.
- Inspection and testing.

The manufacturing process of the transversal hat frames 5 comprises the following steps:
- Hand lay-up on female tool 17 of carbon fiber prepreg.
- Vacuum bagging
- Autoclave curing (6 bar, 180°C).
- Trimming and deburring.
- Inspection and testing.

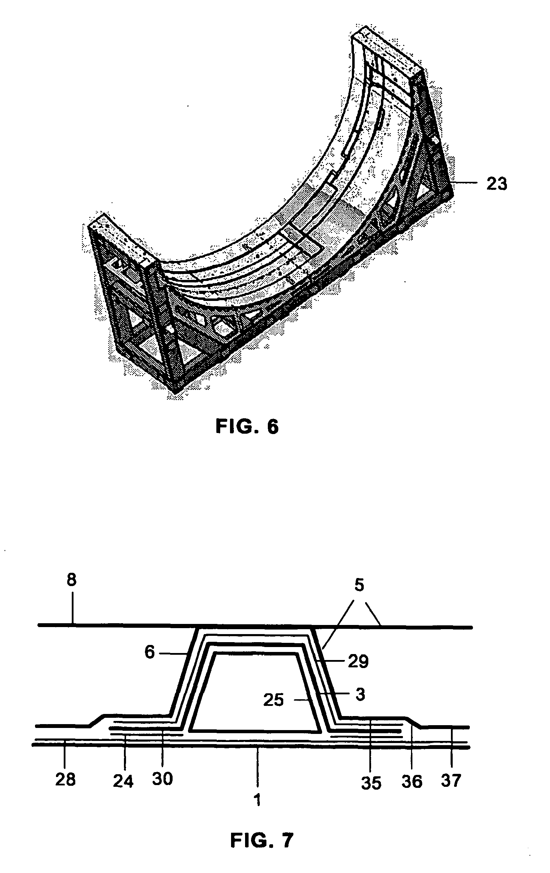

As illustrated in Figs. 1 and 7, transversal hat frames 5 are formed by parts 8 joined to parts 6 to be superimposed over the longitudinal hat frames 3 having all of them an omega cross-section like the longitudinal hat frames 3. Parts 6 include a first zone 35 to be superimposed over the foots 30 of the longitudinal hat frames 3, a second zone 37 to be superimposed over the skin 1 and a transitional zone 36 between them.

The preparation of the longitudinal hat frames 3 comprises the following steps:
- Hand lay-up of prepreg carbon fiber on to male tools 15 placed over tools 23 having the same shape than the skin 1.
- Vacuum debulking.
- Turn over and unload the longitudinal hat frames 3 from male tools 15 using special covers 21 for transportation.
- Insert tubular vacuum bags 25 into each longitudinal hat frame 3.
- Adhesive 24 hand lay-up on inner foot face.

The assembly of the fan-cowl 9 comprises the following steps:
- Locating skin 1 on autoclave tool 13.
- Hand lay-up of adhesive and glass fiber prepreg 28 on the inner face of the skin 1
- Locating longitudinal hat frames 3 with transportation covers 21 and internal vacuum bags 25 over skin 1 using a special bridge tooling (not shown) for controlling their position.
- Remove the transportation covers 21
- Adhesive 29 hand lay-up on longitudinal hat frames 3.
- Locating transversal hat frames 5
- Locating covers for the curing process
- Vacuum bagging.
- Autoclave curing (6 bar, 180°C). In this step longitudinal hat frames 3 and skin 1 are co-bonded. Skin 1 and transversal hat frames 5 are subject to a secondary bonding.
- Trimming.
- Inspection and testing.
- Painting
- Final inspection

Although the present invention has been fully described in connection with preferred embodiments, it is evident that modifications may be introduced within the scope thereof, not considering this as limited by these embodiments, but by the contents of the following claims.

## Claims

1. Process for manufacturing a monolithic fan cowl (9) of curvilinear shape for aircraft engines assembling a skin (1), several longitudinal hat frames (3) and several transversal hat frames (5) of composite material, including the steps of:
a) providing said skin (1) cured, said longitudinal hat frames (3) uncured and said transversal hat frames (5) cured;
b) placing said longitudinal hat frames (3) on the skin (1) with a vacuum bag (25) inserted into them, the vacuum bag being used during an autoclave cycle;
c) placing said transversal hat frames (5) over the longitudinal frames (3) and the skin (1), the transversal hat frames (5) being formed by a first part (8) joined to second parts (6) to be superimposed over the longitudinal hat frames (3) having all an omega cross-section;
d) covering the assembly with a vacuum bag;
e) performing the autoclave cycle under high temperature and pressure conditions for co-bonding the skin (1) and the longitudinal hat frames (3), and for a secondary bonding of the transversal hat frames (5) to the skin (1) and co-bonding of the transversal hat frames (5) and the longitudinal hat frames (3).

2. Process for manufacturing a monolithic fan cowl (9) according to claim 1, wherein said second parts (6) comprise foots including a first zone (35) to be superimposed over foots (30) of the longitudinal hat frame (3), a second zone (37) to be superimposed over the skin (1) and a transitional zone (36) between them.

## Patentansprüche

1. Verfahren zur Herstellung einer monolithischen Lüfterhaube (9) mit krummliniger Form für Flugzeugmotoren, bei dem eine Hülle (1) ; mehrere Längshutspanten (3) mit einem Omegaquerschnitt und mehrere Querhutspanten (5) aus Verbundmaterial zusammengebaut werden, mit den Schritten:
a) Bereitstellen der Hülle (1) im gehärteten Zustand, der Längshutspanten (3) im ungehärteten Zustand und der Querhutspanten (5) im gehärteten Zustand;
b) Plazieren der Längshutspanten (3) auf der Hülle (1) mit einem in sie eingeführten Vakuumsack (25), wobei der Vakuumsack während eines Autoklavzyklus verwendet wird;
c) Plazieren der Querhutspanten (5) über den Längshutspanten (3) und der Hülle (1), wobei die Querhutspanten (5) durch ein erstes Teil (8) gebildet sind, das mit weiten Teilen (6) zusammengefügt ist, um über die Längshutspanten (3) gelegt zu werden, die alle einen Omegaquerschnitt haben;
d) Abdecken der Anordnung mit einem Vakuumsack;
e) Durchführen des Autoklavzyklus unter Bedingungen mit hoher Temperatur und hohem Druck zum co-bonding bzw. gemeinsamen Verbinden der Hülle (1) und der Längshutspanten (3) und zum sekundären Verbinden der Querhutspanten (5) mit der Hülle (1) und zum co-bonding der Querhutspanten (5) und den Längshutspanten (3).

2. Verfahren zur Herstellung einer monolithischen Lüfterhaube (9) nach Anspruch, 1, wobei die zweiten Teile (6) aufweisen: Füße mit einer ersten Zone (35), die über Füße (30) des Längshutspants (3) zu legen ist, einer zweiten Zone (37), die über die Hülle (1) zu liegen ist, und einer Übergangszone (36) zwischen ihnen.

## Revendications

1. Procédé pour fabriquer un capot de ventilateur monolithique (9) de forme curviligne pour des moteurs d'avion assemblant un revêtement (1), plusieurs châssis longitudinaux en forme de chapeau (3) ayant une section transversale en forme d'oméga et plusieurs châssis transversaux en forme de chapeau (5) réalisés en matériau composite, comprenant les étapes consistant à :
a) prévoir ledit revêtement (1) durci, lesdits châssis longitudinaux en forme de chapeau (3) non durcis et lesdits châssis transversaux en forme de chapeau (5) durcis ;
b) placer lesdits châssis longitudinaux en forme de chapeau (3) sur le revêtement (1) avec un sac sous vide (25) inséré dans ces derniers, le sac sous vide étant utilisé pendant un cycle d'autoclave ;
c) placer lesdits châssis transversaux en forme de chapeau (5) sur les châssis longitudinaux en forme de chapeau (3) et le revêtement (1), les châssis transversaux en forme de chapeau (5) étant formés par une première partie (8) assemblée à des deuxièmes parties (6) destinées il être superposées sur les châssis longitudinaux en forme de chapeau (3) ayant une section transversale en forme d'oméga ;
d) recouvrir l'ensemble avec une sac sous vide ;
e) réaliser le cycle d'autoclave dans des conditions à haute température et haute pression pour relier conjointement le revêtement (1) et les châssis longitudinaux en forme de chapeau (3) et pour une liaison secondaire des châssis transversaux en forme de chapeau (5) sur le revêtement (1) et pour relier conjointement les châssis transversaux en forme de chapeau (5) et les châssis longitudinaux en forme de chapeau (3).

2. Procédé pour fabriquer un capot de ventilateur monolithique (9) selon la revendication 1, dans lequel lesdites deuxièmes parties (6) comprennent des pieds comprenant une première zone (35) destinée à être superposée sur les pieds (30) du châssis longitudinal en forme de chapeau (3), une deuxième zone (37) destinée à être superposée sur le revêtement (1) et une zone transitoire (36) entre elles.
